# EUROPEAN PATENT APPLICATION

(11) **EP 4 303 744 A1**
(43) Date of publication of application: **10.01.2024**
(21) Application number: 23182924.3
(22) Date of filing: 30.06.2023
(51) Int. Cl.: G06F 21/10, G06F 16/957, G06F 21/60, H04L 9/40, H04L 67/02, H04W 12/10

(54) **USER INTERFACE ACTIVATION IN A SECURE NETWORK SYSTEM**

(30) Priority: 08.07.2022 US 202217860637
(71) Applicant: Citrix Systems Inc., Fort Lauderdale, FL 33309 (US)
(72) Inventor: SINGH, Manbinder Pal, Fort Lauderdale, FL 33309 (US)
(74) Representative: Jensen, Anders Damgaard

(57) **Abstract**

A process and system for improving a user experience when using remote browser applications is provided. While a remote browser application is being activated, including establishing an appropriate communication channel and launching the application, pre-cached content may be provided to the client device and user for immediate display and user interaction. User interaction with the pre-cached content may be recorded and stored and transferred to the remote browser application and live content upon completion of the remote browser application and session activation. In some examples, pre-caching the content may include retrieving the content from the content source and removing and/or adding code and data to one or more content files. The cached content may be updated based on various criteria.

## Description

### FIELD

Aspects described herein generally relate to activating a user interface and processing user input to the interface for network content and services. More specifically, aspects described herein relate to expediting interface activation and display in a secure network environment so users can begin interacting with the content more immediately.

### BACKGROUND

Many organizations restrict network access to certain sites or content to limit the risk of malicious activity, increase the security of computers, servers and other devices within the organization's network, minimize downloading of possible malware, and the like. In some environments, however, these restricted sites or content may be accessed through specialized applications, such as secure browsers, that provide an additional layer of security when accessing those sites or content. For example, the secure browsers may execute in a contained computing environment (e.g., a sandbox) or that limits the possible interactions with the sites or content (e.g., no downloading, no running scripts, etc.).

However, in some existing network and computing environments, executing a secure browser requires perceptible loading time to initialize the browser on a remote device and further may require establishing a secure communication channel with the remote device. Accordingly, users may need to wait a discernible amount of time before they are able to interact with the requested site or content. In contrast, accessing a site or network content using a local browser is often much faster, thereby allowing a user to more immediately interact with the requested site or content.

### SUMMARY

The following presents a simplified summary of various aspects described herein. This summary is not an extensive overview, and is not intended to identify required or critical elements or to delineate the scope of the claims. The following summary merely presents some concepts in a simplified form as an introductory prelude to the more detailed description provided below.

Systems and processes are needed to provide users with more immediate access to content while a remote browser session is being activated. Rather than waiting for the remote browser session interface, a user, through their client device, may be provided with an interface generated using pre-cached content. The user may interact with the pre-cached content, and this interaction may subsequently be transferred to the live content interface once the remote browser session activation is completed.

Aspects described herein further relate to pre-caching content, including retrieving content from a content source and parsing the content to generate a local version of the content. This process may be performed prior to a request for the content from a user. Generating the local version of the content may include removing script or other code from the content and inserting script or code. For example, a caching system may insert user input processing code or script for input elements identified in the content.

According to further aspects, a remote browser server may initiate activation of a browser session upon receiving a request from a client system. In conjunction with initiating activation of the browser session, and while the activation is on-going, the remote browser server may provide the client system with a pre-cached version of requested content. Additionally, in some arrangements, the remote browser server may provide notifications to the client system when the browser session activation is complete. In response, the remote browser server may receive user input to be injected or otherwise inputted into the remote browser application and live content interface. In some arrangements, the browser session may be activated within a sandbox environment in the client device such as a local virtual machine (e.g., micro virtual machine) managed by a client-based hypervisor. Accordingly, the requests to activate a browser session and other processes associated with activating the browser session and retrieving the requested content through that browser session may be performed by the local client device.

In an embodiment of the present disclosure, one or more non-transitory computer readable media may be provided to perform one or more of the processes described herein.

These and additional aspects will be appreciated with the benefit of the disclosures discussed in further detail below.

### BRIEF DESCRIPTION OF THE DRAWINGS

A more complete understanding of aspects described herein and the advantages thereof may be acquired by referring to the following description in consideration of the accompanying drawings, in which like reference numbers indicate like features, and wherein:
Figure 1 depicts an illustrative computer system architecture that may be used in accordance with one or more illustrative aspects described herein.
Figure 2 depicts an illustrative remote-access system architecture that may be used in accordance with one or more illustrative aspects described herein.
Figure 3 depicts an illustrative virtualized system architecture that may be used in accordance with one or more illustrative aspects described herein.
Figure 4 is a flowchart illustrating an example process by which a client system may generate a user interface using pre-stored or pre-cached content according to one or more illustrative aspects described herein.
Figure 5 illustrates an example process flow for accessing content using a remote browser session according to one or more illustrative aspects described herein.
Figure 6 is a flowchart illustrating an example process for pre-caching content within a network environment according to one or more illustrative aspects described herein.
Figure 7 is a flowchart illustrating an example process for executing a remote browsing session according to one or more illustrative aspects described herein.

### DETAILED DESCRIPTION

In the following description of the various embodiments, reference is made to the accompanying drawings identified above and which form a part hereof, and in which is shown by way of illustration various embodiments in which aspects described herein may be practiced. It is to be understood that other embodiments may be utilized and structural and functional modifications may be made without departing from the scope described herein. Various aspects are capable of other embodiments and of being practiced or being carried out in various different ways.

As a general introduction to the subject matter described in more detail below, aspects described herein are directed towards providing faster access to requested content when secure network protocols are required. Systems and methods are provided to pre-store or pre-cache content that may be requested by users in a network environment, and to provide the pre-stored or pre-cached content to the user while a secure network access application and requisite communication channels are launched, and live content corresponding to the pre-cached content is being retrieved. User interactions such as user input may be received through the pre-cached content and transferred to the live content once the secure network access applications is launched and requisite communication channels established. These processes may be executed through a remote access client that is configured to seamlessly and transparently switch between the pre-cached content and the live content.

It is to be understood that the phraseology and terminology used herein are for the purpose of description and should not be regarded as limiting. Rather, the phrases and terms used herein are to be given their broadest interpretation and meaning. The use of "including" and "comprising" and variations thereof is meant to encompass the items listed thereafter and equivalents thereof as well as additional items and equivalents thereof. The use of the terms "connected," "coupled," and similar terms, is meant to include both direct and indirect mounting, connecting, coupling, positioning and engaging.

### COMPUTING ARCHITECTURE

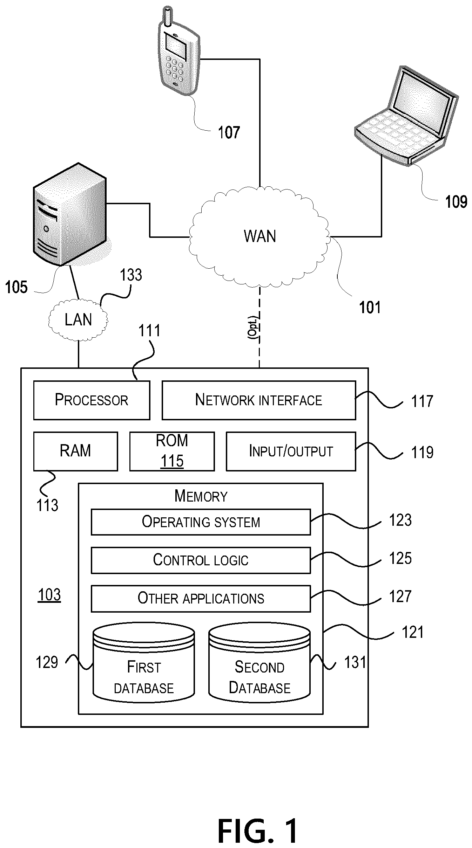

Computer software, hardware, and networks may be utilized in a variety of different system environments, including standalone, networked, remote-access (also known as remote desktop), virtualized, and/or cloud-based environments, among others. FIG. 1 illustrates one example of a system architecture and data processing device that may be used to implement one or more illustrative aspects described herein in a standalone and/or networked environment. Various network nodes 103, 105, 107, and 109 may be interconnected via a wide area network (WAN) 101, such as the Internet. Other networks may also or alternatively be used, including private intranets, corporate networks, local area networks (LAN), metropolitan area networks (MAN), wireless networks, personal networks (PAN), and the like. Network 101 is for illustration purposes and may be replaced with fewer or additional computer networks. A local area network 133 may have one or more of any known LAN topology and may use one or more of a variety of different protocols, such as Ethernet. Devices 103, 105, 107, and 109 and other devices (not shown) may be connected to one or more of the networks via twisted pair wires, coaxial cable, fiber optics, radio waves, or other communication media.

The term "network" as used herein and depicted in the drawings refers not only to systems in which remote storage devices are coupled together via one or more communication paths, but also to stand-alone devices that may be coupled, from time to time, to such systems that have storage capability. Consequently, the term "network" includes not only a "physical network" but also a "content network," which is comprised of the data-attributable to a single entity-which resides across all physical networks.

The components may include data server 103, web server 105, and client computers 107, 109. Data server 103 provides overall access, control and administration of databases and control software for performing one or more illustrative aspects describe herein. Data server 103 may be connected to web server 105 through which users interact with and obtain data as requested. Alternatively, data server 103 may act as a web server itself and be directly connected to the Internet. Data server 103 may be connected to web server 105 through local area network 133, wide area network 101 (e.g., the Internet), via direct or indirect connection, or via some other network. Users may interact with the data server 103 using remote computers 107, 109, e.g., using a web browser to connect to data server 103 via one or more externally exposed web sites hosted by web server 105. Client computers 107, 109 may be used in concert with data server 103 to access data stored therein, or may be used for other purposes. For example, from client device 107 a user may access web server 105 using an Internet browser, as is known in the art, or by executing a software application that communicates with web server 105 and/or data server 103 over a computer network (such as the Internet).

Servers and applications may be combined on the same physical machines, and retain separate virtual or logical addresses, or may reside on separate physical machines. FIG. 1 illustrates just one example of a network architecture that may be used, and those of skill in the art will appreciate that the specific network architecture and data processing devices used may vary, and are secondary to the functionality that they provide, as further described herein. For example, services provided by web server 105 and data server 103 may be combined on a single server.

Each component 103, 105, 107, 109 may be any type of known computer, server, or data processing device. Data server 103, e.g., may include a processor 111 controlling overall operation of the data server 103. Data server 103 may further include random access memory (RAM) 113, read only memory (ROM) 115, network interface 117, input/output interfaces 119 (e.g., keyboard, mouse, display, printer, etc.), and memory 121. Input/output (I/O) 119 may include a variety of interface units and drives for reading, writing, displaying, and/or printing data or files. Memory 121 may further store operating system software 123 for controlling overall operation of data processing device 103, control logic 125 for instructing data server 103 to perform aspects described herein, and other application software 127 providing secondary, support, and/or other functionality which may or might not be used in conjunction with aspects described herein. Control logic 125 may also be referred to herein as data server software 125. Functionality of data server software 125 may refer to operations or decisions made automatically based on rules coded into control logic 125, made manually by a user providing input into the system, and/or a combination of automatic processing based on user input (e.g., queries, data updates, etc.).

Memory 121 may also store data used in performance of one or more aspects described herein, including a first database 129 and a second database 131. In some embodiments, first database 129 may include second database 131 (e.g., as a separate table, report, etc.). That is, the information can be stored in a single database, or separated into different logical, virtual, or physical databases, depending on system design. Devices 105, 107, 109 may have similar or different architecture as described with respect to device 103. Those of skill in the art will appreciate that the functionality of data processing device 103 (or device 105, 107, 109) as described herein may be spread across multiple data processing devices, for example, to distribute processing load across multiple computers, to segregate transactions based on geographic location, user access level, quality of service (QoS), etc.

One or more aspects may be embodied in computer-usable or readable data and/or computer-executable instructions, such as in one or more program modules, executed by one or more computers or other devices as described herein. Generally, program modules include routines, programs, objects, components, data structures, etc. that perform particular tasks or implement particular abstract data types when executed by a processor in a computer or other device. The modules may be written in a source code programming language that is subsequently compiled for execution, or may be written in a scripting language such as (but not limited to) HyperText Markup Language (HTML) or Extensible Markup Language (XML). The computer executable instructions may be stored on a computer readable medium such as a nonvolatile storage device. Any suitable computer readable storage media may be utilized, including hard disks, CD-ROMs, optical storage devices, magnetic storage devices, solid state storage devices, and/or any combination thereof. In addition, various transmission (non-storage) media representing data or events as described herein may be transferred between a source and a destination in the form of electromagnetic waves traveling through signal-conducting media such as metal wires, optical fibers, and/or wireless transmission media (e.g., air and/or space). Various aspects described herein may be embodied as a method, a data processing system, or a computer program product. Therefore, various functionalities may be embodied in whole or in part in software, firmware, and/or hardware or hardware equivalents such as integrated circuits, field programmable gate arrays (FPGA), and the like. Particular data structures may be used to more effectively implement one or more aspects described herein, and such data structures are contemplated within the scope of computer executable instructions and computer-usable data described herein.

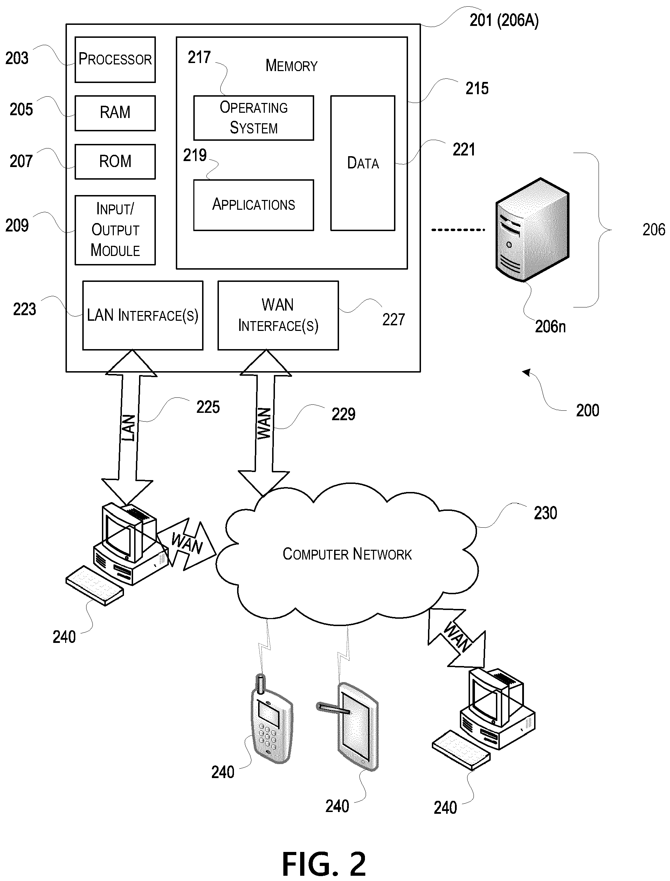

With further reference to FIG. 2, one or more aspects described herein may be implemented in a remote-access environment. FIG. 2 depicts an example system architecture including a computing device 201 in an illustrative computing environment 200 that may be used according to one or more illustrative aspects described herein. Computing device 201 may be used as a server 206a in a single-server or multi-server desktop virtualization system (e.g., a remote access or cloud system) and can be configured to provide virtual machines for client access devices. The computing device 201 may have a processor 203 for controlling overall operation of the device 201 and its associated components, including RAM 205, ROM 207, Input/Output (I/O) module 209, and memory 215.

I/O module 209 may include a mouse, keypad, touch screen, scanner, optical reader, and/or stylus (or other input device(s)) through which a user of computing device 201 may provide input, and may also include one or more of a speaker for providing audio output and one or more of a video display device for providing textual, audiovisual, and/or graphical output. Software may be stored within memory 215 and/or other storage to provide instructions to processor 203 for configuring computing device 201 into a special purpose computing device in order to perform various functions as described herein. For example, memory 215 may store software used by the computing device 201, such as an operating system 217, application programs 219, and an associated database 221.

Computing device 201 may operate in a networked environment supporting connections to one or more remote computers, such as terminals 240 (also referred to as client devices and/or client machines). The terminals 240 may be personal computers, mobile devices, laptop computers, tablets, or servers that include many or all of the elements described above with respect to the computing device 103 or 201. The network connections depicted in FIG. 2 include a local area network (LAN) 225 and a wide area network (WAN) 229, but may also include other networks. When used in a LAN networking environment, computing device 201 may be connected to the LAN 225 through a network interface or adapter 223. When used in a WAN networking environment, computing device 201 may include a modem or other wide area network interface 227 for establishing communications over the WAN 229, such as computer network 230 (e.g., the Internet). It will be appreciated that the network connections shown are illustrative and other means of establishing a communications link between the computers may be used. Computing device 201 and/or terminals 240 may also be mobile terminals (e.g., mobile phones, smartphones, personal digital assistants (PDAs), notebooks, etc.) including various other components, such as a battery, speaker, and antennas (not shown).

Aspects described herein may also be operational with numerous other general purpose or special purpose computing system environments or configurations. Examples of other computing systems, environments, and/or configurations that may be suitable for use with aspects described herein include, but are not limited to, personal computers, server computers, hand-held or laptop devices, multiprocessor systems, microprocessor-based systems, set top boxes, programmable consumer electronics, network personal computers (PCs), minicomputers, mainframe computers, distributed computing environments that include any of the above systems or devices, and the like.

As shown in FIG. 2, one or more client devices 240 may be in communication with one or more servers 206a-206n (generally referred to herein as "server(s) 206"). In one embodiment, the computing environment 200 may include a network appliance installed between the server(s) 206 and client machine(s) 240. The network appliance may manage client/server connections, and in some cases can load balance client connections amongst a plurality of backend servers 206.

The client machine(s) 240 may in some embodiments be referred to as a single client machine 240 or a single group of client machines 240, while server(s) 206 may be referred to as a single server 206 or a single group of servers 206. In one embodiment a single client machine 240 communicates with more than one server 206, while in another embodiment a single server 206 communicates with more than one client machine 240. In yet another embodiment, a single client machine 240 communicates with a single server 206.

A client machine 240 can, in some embodiments, be referenced by any one of the following non-exhaustive terms: client machine(s); client(s); client computer(s); client device(s); client computing device(s); local machine; remote machine; client node(s); endpoint(s); or endpoint node(s). The server 206, in some embodiments, may be referenced by any one of the following non-exhaustive terms: server(s), local machine; remote machine; server farm(s), or host computing device(s).

In one embodiment, the client machine 240 may be a virtual machine. The virtual machine may be any virtual machine, while in some embodiments the virtual machine may be any virtual machine managed by a Type 1 or Type 2 hypervisor, for example, a hypervisor developed by Citrix Systems, IBM, VMware, or any other hypervisor. In some aspects, the virtual machine may be managed by a hypervisor, while in other aspects the virtual machine may be managed by a hypervisor executing on a server 206 or a hypervisor executing on a client 240.

Some embodiments include a client device 240 that displays application output generated by an application remotely executing on a server 206 or other remotely located machine. In these embodiments, the client device 240 may execute a virtual machine receiver program or application to display the output in an application window, a browser, or other output window. In one example, the application is a desktop, while in other examples the application is an application that generates or presents a desktop. A desktop may include a graphical shell providing a user interface for an instance of an operating system in which local and/or remote applications can be integrated. Applications, as used herein, are programs that execute after an instance of an operating system (and, optionally, also the desktop) has been loaded.

The server 206, in some embodiments, uses a remote presentation protocol or other program to send data to a thin-client or remote-display application executing on the client to present display output generated by an application executing on the server 206. The thin-client or remote-display protocol can be any one of the following non-exhaustive list of protocols: the Independent Computing Architecture (ICA) protocol developed by Citrix Systems, Inc. of Ft. Lauderdale, Florida; or the Remote Desktop Protocol (RDP) manufactured by the Microsoft Corporation of Redmond, Washington.

A remote computing environment may include more than one server 206a-206n such that the servers 206a-206n are logically grouped together into a server farm 206, for example, in a cloud computing environment. The server farm 206 may include servers 206 that are geographically dispersed while logically grouped together, or servers 206 that are located proximate to each other while logically grouped together. Geographically dispersed servers 206a-206n within a server farm 206 can, in some embodiments, communicate using a WAN (wide), MAN (metropolitan), or LAN (local), where different geographic regions can be characterized as: different continents; different regions of a continent; different countries; different states; different cities; different campuses; different rooms; or any combination of the preceding geographical locations. In some embodiments the server farm 206 may be administered as a single entity, while in other embodiments the server farm 206 can include multiple server farms.

In some embodiments, a server farm may include servers 206 that execute a substantially similar type of operating system platform (e.g., WINDOWS, UNIX, LINUX, iOS, ANDROID, etc.) In other embodiments, server farm 206 may include a first group of one or more servers that execute a first type of operating system platform, and a second group of one or more servers that execute a second type of operating system platform.

Server 206 may be configured as any type of server, as needed, e.g., a file server, an application server, a web server, a proxy server, an appliance, a network appliance, a gateway, an application gateway, a gateway server, a virtualization server, a deployment server, a Secure Sockets Layer (SSL) VPN server, a firewall, a web server, an application server or as a master application server, a server executing an active directory, or a server executing an application acceleration program that provides firewall functionality, application functionality, or load balancing functionality. Other server types may also be used.

Some embodiments include a first server 206a that receives requests from a client machine 240, forwards the request to a second server 206b (not shown), and responds to the request generated by the client machine 240 with a response from the second server 206b (not shown.) First server 206a may acquire an enumeration of applications available to the client machine 240 as well as address information associated with an application server 206 hosting an application identified within the enumeration of applications. First server 206a can then present a response to the client's request using a web interface, and communicate directly with the client 240 to provide the client 240 with access to an identified application. One or more clients 240 and/or one or more servers 206 may transmit data over network 230, e.g., network 101.

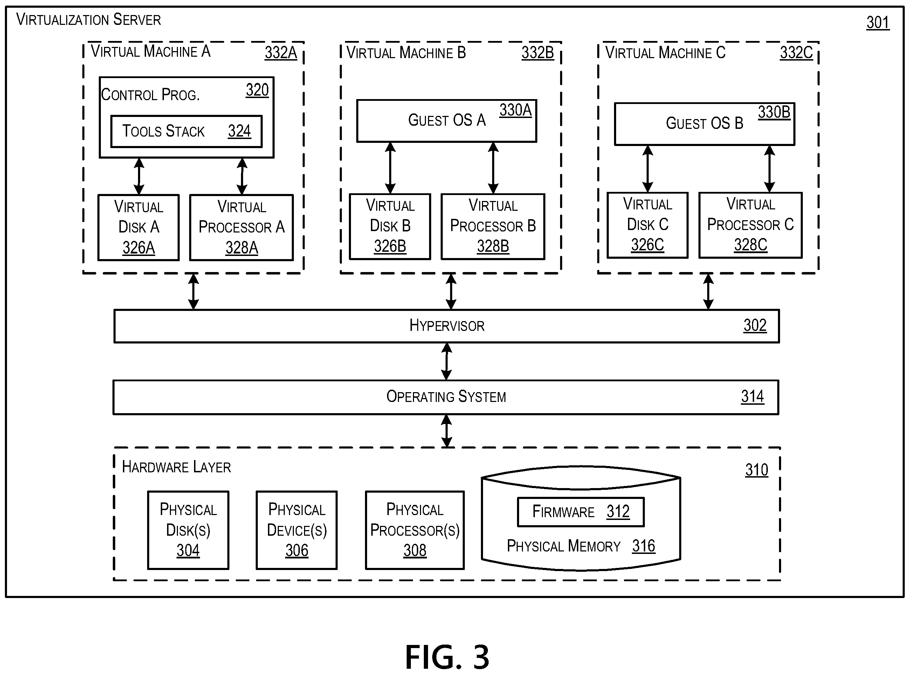

FIG. 3 shows a high-level architecture of an illustrative desktop virtualization system. As shown, the desktop virtualization system may be single-server or multi-server system, or cloud system, including at least one virtualization server 301 configured to provide virtual desktops and/or virtual applications to one or more client access devices 240. As used herein, a desktop refers to a graphical environment or space in which one or more applications may be hosted and/or executed. A desktop may include a graphical shell providing a user interface for an instance of an operating system in which local and/or remote applications can be integrated. Applications may include programs that execute after an instance of an operating system (and, optionally, also the desktop) has been loaded. Each instance of the operating system may be physical (e.g., one operating system per device) or virtual (e.g., many instances of an OS running on a single device). Each application may be executed on a local device, or executed on a remotely located device (e.g., remoted).

A computer device 301 may be configured as a virtualization server in a virtualization environment, for example, a single-server, multi-server, or cloud computing environment. Virtualization server 301 illustrated in FIG. 3 can be deployed as and/or implemented by one or more embodiments of the server 206 illustrated in FIG. 2 or by other known computing devices. Included in virtualization server 301 is a hardware layer that can include one or more physical disks 304, one or more physical devices 306, one or more physical processors 308, and one or more physical memories 316. In some embodiments, firmware 312 can be stored within a memory element in the physical memory 316 and can be executed by one or more of the physical processors 308. Virtualization server 301 may further include an operating system 314 that may be stored in a memory element in the physical memory 316 and executed by one or more of the physical processors 308. Still further, a hypervisor 302 may be stored in a memory element in the physical memory 316 and can be executed by one or more of the physical processors 308.

Executing on one or more of the physical processors 308 may be one or more virtual machines 332A-C (generally 332). Each virtual machine 332 may have a virtual disk 326A-C and a virtual processor 328A-C. In some embodiments, a first virtual machine 332A may execute, using a virtual processor 328A, a control program 320 that includes a tools stack 324. Control program 320 may be referred to as a control virtual machine, Dom0, Domain 0, or other virtual machine used for system administration and/or control. In some embodiments, one or more virtual machines 332B-C can execute, using a virtual processor 328B-C, a guest operating system 330A-B.

Virtualization server 301 may include a hardware layer 310 with one or more pieces of hardware that communicate with the virtualization server 301. In some embodiments, the hardware layer 310 can include one or more physical disks 304, one or more physical devices 306, one or more physical processors 308, and one or more physical memory 316. Physical components 304, 306, 308, and 316 may include, for example, any of the components described above. Physical devices 306 may include, for example, a network interface card, a video card, a keyboard, a mouse, an input device, a monitor, a display device, speakers, an optical drive, a storage device, a universal serial bus connection, a printer, a scanner, a network element (e.g., router, firewall, network address translator, load balancer, virtual private network (VPN) gateway, Dynamic Host Configuration Protocol (DHCP) router, etc.), or any device connected to or communicating with virtualization server 301. Physical memory 316 in the hardware layer 310 may include any type of memory. Physical memory 316 may store data, and in some embodiments may store one or more programs, or set of executable instructions. FIG. 3 illustrates an embodiment where firmware 312 is stored within the physical memory 316 of virtualization server 301. Programs or executable instructions stored in the physical memory 316 can be executed by the one or more processors 308 of virtualization server 301.

Virtualization server 301 may also include a hypervisor 302. In some embodiments, hypervisor 302 may be a program executed by processors 308 on virtualization server 301 to create and manage any number of virtual machines 332. Hypervisor 302 may be referred to as a virtual machine monitor, or platform virtualization software. In some embodiments, hypervisor 302 can be any combination of executable instructions and hardware that monitors virtual machines executing on a computing machine. Hypervisor 302 may be Type 2 hypervisor, where the hypervisor executes within an operating system 314 executing on the virtualization server 301. Virtual machines may then execute at a level above the hypervisor 302. In some embodiments, the Type 2 hypervisor may execute within the context of a user's operating system such that the Type 2 hypervisor interacts with the user's operating system. In other embodiments, one or more virtualization servers 301 in a virtualization environment may instead include a Type 1 hypervisor (not shown). A Type 1 hypervisor may execute on the virtualization server 301 by directly accessing the hardware and resources within the hardware layer 310. That is, while a Type 2 hypervisor 302 accesses system resources through a host operating system 314, as shown, a Type 1 hypervisor may directly access all system resources without the host operating system 314. A Type 1 hypervisor may execute directly on one or more physical processors 308 of virtualization server 301, and may include program data stored in the physical memory 316.

Hypervisor 302, in some embodiments, can provide virtual resources to operating systems 330 or control programs 320 executing on virtual machines 332 in any manner that simulates the operating systems 330 or control programs 320 having direct access to system resources. System resources can include, but are not limited to, physical devices 306, physical disks 304, physical processors 308, physical memory 316, and any other component included in hardware layer 310 of the virtualization server 301. Hypervisor 302 may be used to emulate virtual hardware, partition physical hardware, virtualize physical hardware, and/or execute virtual machines that provide access to computing environments. In still other embodiments, hypervisor 302 may control processor scheduling and memory partitioning for a virtual machine 332 executing on virtualization server 301. Hypervisor 302 may include those manufactured by VMWare, Inc., of Palo Alto, California; HyperV, Virtual Server or virtual PC hypervisors provided by Microsoft, or others. In some embodiments, virtualization server 301 may execute a hypervisor 302 that creates a virtual machine platform on which guest operating systems may execute. In these embodiments, the virtualization server 301 may be referred to as a host server. An example of such a virtualization server is the Citrix Hypervisor provided by Citrix Systems, Inc., of Fort Lauderdale, FL.

Hypervisor 302 may create one or more virtual machines 332B-C (generally 332) in which guest operating systems 330 execute. In some embodiments, hypervisor 302 may load a virtual machine image to create a virtual machine 332. In other embodiments, the hypervisor 302 may execute a guest operating system 330 within virtual machine 332. In still other embodiments, virtual machine 332 may execute guest operating system 330.

In addition to creating virtual machines 332, hypervisor 302 may control the execution of at least one virtual machine 332. In other embodiments, hypervisor 302 may present at least one virtual machine 332 with an abstraction of at least one hardware resource provided by the virtualization server 301 (e.g., any hardware resource available within the hardware layer 310). In other embodiments, hypervisor 302 may control the manner in which virtual machines 332 access physical processors 308 available in virtualization server 301. Controlling access to physical processors 308 may include determining whether a virtual machine 332 should have access to a processor 308, and how physical processor capabilities are presented to the virtual machine 332.

As shown in FIG. 3, virtualization server 301 may host or execute one or more virtual machines 332. A virtual machine 332 is a set of executable instructions that, when executed by a processor 308, may imitate the operation of a physical computer such that the virtual machine 332 can execute programs and processes much like a physical computing device. While FIG. 3 illustrates an embodiment where a virtualization server 301 hosts three virtual machines 332, in other embodiments virtualization server 301 can host any number of virtual machines 332. Hypervisor 302, in some embodiments, may provide each virtual machine 332 with a unique virtual view of the physical hardware, memory, processor, and other system resources available to that virtual machine 332. In some embodiments, the unique virtual view can be based on one or more of virtual machine permissions, application of a policy engine to one or more virtual machine identifiers, a user accessing a virtual machine, the applications executing on a virtual machine, networks accessed by a virtual machine, or any other desired criteria. For instance, hypervisor 302 may create one or more unsecure virtual machines 332 and one or more secure virtual machines 332. Unsecure virtual machines 332 may be prevented from accessing resources, hardware, memory locations, and programs that secure virtual machines 332 may be permitted to access. In other embodiments, hypervisor 302 may provide each virtual machine 332 with a substantially similar virtual view of the physical hardware, memory, processor, and other system resources available to the virtual machines 332.

Each virtual machine 332 may include a virtual disk 326A-C (generally 326) and a virtual processor 328A-C (generally 328.) The virtual disk 326, in some embodiments, is a virtualized view of one or more physical disks 304 of the virtualization server 301, or a portion of one or more physical disks 304 of the virtualization server 301. The virtualized view of the physical disks 304 can be generated, provided, and managed by the hypervisor 302. In some embodiments, hypervisor 302 provides each virtual machine 332 with a unique view of the physical disks 304. Thus, in these embodiments, the particular virtual disk 326 included in each virtual machine 332 can be unique when compared with the other virtual disks 326.

A virtual processor 328 can be a virtualized view of one or more physical processors 308 of the virtualization server 301. In some embodiments, the virtualized view of the physical processors 308 can be generated, provided, and managed by hypervisor 302. In some embodiments, virtual processor 328 has substantially all of the same characteristics of at least one physical processor 308. In other embodiments, virtual processor 308 provides a modified view of physical processors 308 such that at least some of the characteristics of the virtual processor 328 are different than the characteristics of the corresponding physical processor 308.

In some network environments, including those described with respect to FIGS. 1-3, a user may be restricted from accessing certain network sites or content in order to minimize risk of malicious activity and/or malware infections. For example, an organization such as a business may wish to insulate their private network environment from viruses or phishing attacks or other malicious activity. To do so, the organization may implement certain policies and limitations on the sites and type of content that may be accessed by the user through the organization's network(s) and/or devices. However, in some instances, the organization may allow access to some sites or content through a secure network browser or other network access application. A secure network access application may be implemented in a sandbox environment so that the device (or part of a device) on which the application is executed is isolated from other devices and/or systems in the organization's network. A user may access the application using remote access protocols and clients as discussed with respect to FIGS. 2 and 3. Accordingly, if the content or site the user accesses is associated with malware or a malicious entity, the resulting malicious activity may be isolated to that device or partition of that device.

Providing access to certain sites or content through a remote application often requires more wait time as compared to accessing a site or content using a local application such as a local web browser or media streaming application or FTP client or the like. For example, the user may need to wait for the remote application to be launched on the remote device and for a communication channel to be established between the user's local device and the remote device for the remote network access application. Such wait times may reduce user productivity and/or otherwise result in a more negative experience for the user. To address such possible drawbacks to using remote network access applications, systems and methods may be implemented to provide a user with a cached version of the requested content that may be more immediately accessed while the remote network access application is being launched and the source content from the network site is being retrieved.

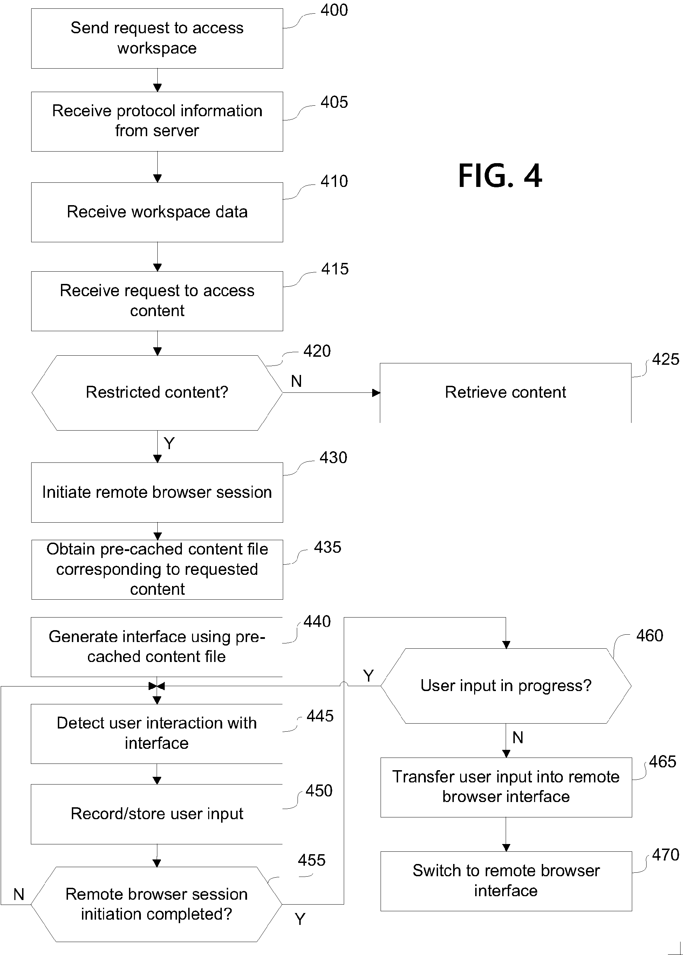

FIG. 4 is a flowchart illustrating an example process by which a computing or client device may facilitate remote network access to content or sites with reduced wait times. In step 400, a client device may send a request to access a workspace in response to user input through a client application. In one example, the client application may be a browser application such as a web browser. The request to access a workspace may include requesting access to a virtual desktop hosted or otherwise provided by a server. As discussed herein, virtual desktops (e.g., corresponding to virtual machines) may be managed by a hypervisor running on a remote server. This allows users to access their desktop, applications, and data without requiring local storage of the data or applications or local execution of code other than the virtual client. Additionally, providing a remote workspace or virtual desktop may reduce the hardware requirements for a user's local device.

In response to the request to access a workspace, the client device may receive communication protocol information from the virtualization server in step 405. The communication protocol information may include specifications on the type and format of data to be sent and received and may further include security protocols for transmitting and receiving data. Further, in step 410, the client device may begin receiving workspace data such as image data for the virtual desktop or application. The image data may be in the form of bitmaps, canvas elements, or other types of user interface data or file formats. User interface data may be sent continuously or rapidly to reflect the current state of the user's virtual desktop or machine in real-time to minimize the perception that the application or desktop is being executed remotely.

In step 415, the client application may receive a request to access certain content. For example, a user may input a web address corresponding to a desired website or web content. In step 420, the client application may determine whether the requested content is restricted or allowed. In some organizations, certain sites (e.g., websites, FTP sites, etc.) or types of content (e.g., executable code, images of a certain nature, etc.) may be disallowed by policy. Accordingly, the client application may be required to confirm that the requested content would not violate the specified policy if the content were retrieved or otherwise accessed. In some arrangements, the client application may make this determination based on reviewing a locally stored policy for criteria or identified restricted sites or content, and comparing the policy information to the requested content. For example, the client application may determine whether a requested website matched a list of restricted addresses. In another example, the client application may determine whether the requested website has a disallowed domain (e.g., *.biz or *.zzz). In other arrangements, the client application may make the determination of step 420 by requesting approval from a remote server, such as the virtualization server or a policy server. In yet other arrangements, the client application may perform both review of a local policy as well as requesting confirmation from a remote device or system. In further examples, this determination may be made based on an approval or disapproval provided by another machine or using a service such as a website (URL) reputation service or a service that categorizes or assesses risk of a URL by, for example, opening unknown or unsafe links remotely. Alternatively, or additionally, such a service may be configured to detect a client device posture and based on a policy (e.g., that a URL or other content source has a risk level above a certain threshold, or based on a security level of the client device) opens or otherwise retrieves the requested content in a remote browser or application that the client then interfaces with to view and otherwise interact with the content (as discussed in further detail below).

If the requested content is allowed, the client application may proceed to request and retrieve the content using a local browser or content access application in step 425. For example, the client application may retrieve a website in a locally-executed browser or a browser executed within the virtual desktop. If, however, the client application determines that the requested content is restricted or is otherwise flagged as posing a security risk, the client application may initiate a remote browser session to access the content in step 430. Initiating a remote browser session may include requesting execution of a browser application on a remote server or device. The remote server or device may operate in a sandbox environment so as to limit or minimize possible exposure to other systems or devices within the network. In some arrangements, the remote browser application may execute in a sandbox environment within a device (e.g., a separate, dedicated partition or the like) so that other portions of the device are not at risk of being infected with possible malware or other malicious activity. Initiating a remote browser session may also include establishing a dedicated connection (e.g., a remote browser session channel) with the remote server or other device executing the browser. The connection configuration may be specified in a remote access configuration file such as an ICA or RDP file as described herein.

In some arrangements, a remote browser session may be executed within a localized sandbox environment on the client device. In one example, the client device may execute a micro virtual machine within and instantiate a browser application therein to handle such content requests. Accordingly, a remote browser session may be executed locally within the client device or at a remote device depending on the configuration of the system and/or policies of the user and/or organization.

To expedite the presentation of the content to the user while the remote browser application and session are being initiated, the client application may obtain one or more pre-cached or pre-stored content files (or other data structure) corresponding to the requested content in step 435. The pre-cached content file(s) may be a locally-stored (e.g., within the organization's network) copy or other version of the source content. In some arrangements, and as described in further detail below, the pre-cached content file may be a modified version of the source content generated by a pre-caching system. In one example, the pre-cached content file may be provided by a remote server along with the remote browser session connection information. In other arrangements, the pre-cached version of the content may be stored locally in the client device. Upon retrieving the cached content file(s), and in parallel with (and/or before) the initiation of the remote browser session, the client application may generate an interface displaying the pre-cached content file(s) in step 440 to allow the user to interact with the requested content more immediately.

Once the interface has been generated, and while the remote browser application and session initiation is on-going, the client application may detect user interaction such as user input directed to the interface in step 445. The user input may include interactions with a pointing device such as a mouse or trackpad, entry of characters using a keyboard, video or audio capture and the like. Because the generated interface is a stand-in or replica of the source content, the user input will not be processed as intended by the host system or device of the source content. Accordingly, the client application, in step 450, may record or otherwise store the user input while the remote browser session is being initiated. Recording or storing the user input may include identifying a field or input area to which the user input is directed and storing the user input in association with an identifier of the field. For example, if the user is typing characters into a username field of a webpage, the client application may store the inputted characters in association with a username tag or identifier (e.g., HTML tags). Similarly, if the user is inputting an image, audio or other biometric input into a biometric information field, the data may be stored with an indicator or tag corresponding to the biometric information field. In some arrangements, the user input may be stored locally by the client application or the input may be stored by the virtual machine or desktop or both depending on the required redundancy or system configuration of the virtualization environment.

In step 455, the client application may determine whether the remote browser session initiation has completed. For example, the client application may receive a message from the remote browser server that the remote browser application has launched and that the session connection has been established. In some instances, the client application may send periodic queries to the remote browser server to determine whether the remote browser session initiation is complete. If the client application determines that launching or initiation of the remote browser session has not completed, the client application may continue to monitor and store user input in steps 445 and 450.

If, on the other hand, the client application determines that launching and activation of the remote browser session has completed, the client application may further determine whether the user is in the middle of entering information (i.e., providing user input) in step 460. The client application may make this determination based on a continuous amount of time during which the user has not provided any input. For example, if no user input is detected for a continuous 2 seconds, the client application may determine that the user is not currently inputting information into the generated interface. The time threshold may be user configurable or may be preset by the system. In another example, the client application may determine if a user has completed user input based on whether the user has switched focus from one input element to another input element (or another part of the interface). For instance, if a user enters their username and subsequently tabs to another input field or clicks another part of the interface such that input focus is removed from the username input field, the client application may determine that the user has completed entering their username. In yet other examples, if the user has not provided any user input into the generated interface, the client application may determine that the user is not in the middle of enter user input. In still other examples, the client application may make determining that the user is not in the middle of enter input into the interface if the user has switched to another application (e.g., a document editing program, or a calculator application). Various other ways or combinations of determinations methods for detecting that a user has completed or stopped entering user input may be used.

If the client application determines that the user is in the middle of providing input, the client application may wait until the user has completed input by returning to step 445. If, however, the client application determines that the user has completed input, the client application may transfer the user input received through the pre-cached interface into the remote browser application interface in step 465. In one example, the client application may transmit the stored user input to the remote browser session to thereby cause the remote browser session to enter the user input into the appropriate input field in the interface. Further, the client application may transmit an indicator, flag or other information element configured to identify the field for which the user input is intended. In some arrangements, user input for multiple fields may be stored and transmitted upon switching from a pre-cached interface to a live interface. Accordingly, user input for a first field may be flagged or tagged with an indicator for the first field, while user input for a second field may be flagged or tagged with another indicator for the second field. Subsequently in step 470, the client application may switch the displayed user interface from the interface generated using the pre-cached content file (or multiple content files or other content data structure corresponding to the requested content) to the interface of the remote browser application, which at this point will be displaying the live source content populated with the stored user input. In some arrangements, the client device or application may confirm that the user input has been populated into the source content before switching to the remote browser session display. This may help minimize any perception by the user that the content is being switched from a pre-cached version to the live content.

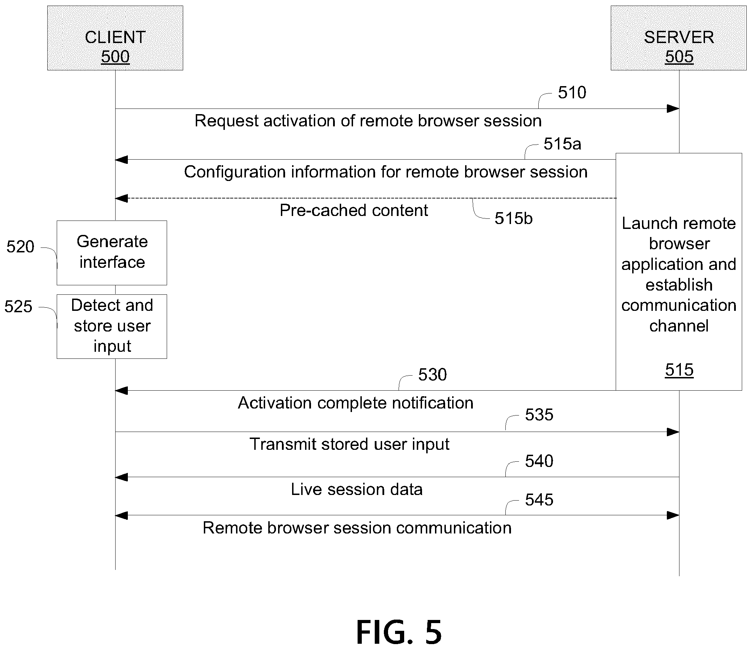

FIG. 5 illustrates an example data and process flow for accelerating user interface presentation and user interaction in a secure network browser environment including a client 500 and a server 505. Flow 510 illustrates a request from a client device 500 to a server 505 for activation of a remote browser session. The request may be transmitted in response to a user request a particular type of content or content from a particular site or type of site. For example, if the user seeks to access a social network site, the client device may determine that social network sites are restricted access sites that require a remote browser session for security purposes. In flow 515, the remote server 505 may initiate a remote browser session, and transmit configuration information to client device 500 (as shown in sub-process 515a). As discussed, initiating a remote browser session may require some time for the browser application to launch (e.g., execution of code to load the program), and to establish the appropriate communication channel between client device 500 and server 505 for the remote session.

Along with the configuration information, the remote server 505 may retrieve and transmit a pre-stored version of the requested content to the client device 500 (as shown in optional sub-process 515b). Accordingly, while the remote browser session is being launched and established (515), the client device 500 may load and generate a user interface based on the pre-stored version of the requested content in process 520. In some arrangements, the pre-cached version of the requested content may be stored locally by the client device 500 and as such, the server 510 might not need to send the pre-cached content in flow 515b. Instead, the client device 500 may locally retrieve the pre-cached content and generate the user interface based thereon. In either case, once the user interface has been generated, client device 500 may detect and begin storing user input directed to the generated user interface in process 525. In process 530, the client device 500 may receive notification that activation of the remote browser session is now complete. For example, the remote server 505 may transmit a message confirming that the remote browser is now active and that the communication channel has been successfully established. In some arrangements, this message or confirmation may correspond to the completion of a handshake process between the remote server 505 and client device 500 for the remote browser communication session.

Upon receiving confirmation that activation of the remote browser session is complete, the client device 500 may transmit the stored user input to the remote server 505 in flow 535. Concurrently with the transmission of the stored user input, the client device 500 may begin receiving remote browser data such as image data (e.g., bitmaps or other image files, canvas elements, etc.) for generating the user interface corresponding to the live remote browser's display of the requested content or site as shown in process flow 540. In some examples, remote browser data may be transmitted in process 535, i.e., along with the notification that the remote browser session has been activated, as well. The user, through the client device 500, may then begin interacting with the live site or content using the remote browser application session as illustrated by flow 545.

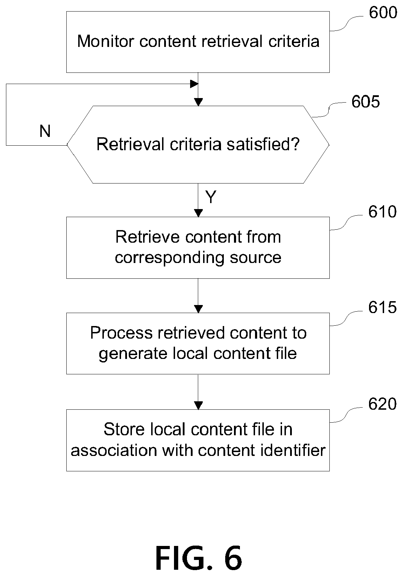

Providing more immediate access to requested sites and content while a remote browser session is being activated involves the use of pre-cached or pre-stored versions of the requested site or content. Generating these versions may include a client device or server retrieving or crawling certain sites or network locations prior to a user requesting the content. In one example, a backend service executing at a remote browser server may periodically or based on some specified schedule navigate to and retrieve content from sites that may be more frequently requested by users. FIG. 6 illustrates a process by which a page or other content may be pre-cached or pre-stored for allow for faster access by a user. In step 600, a remote browser server may monitor for certain criteria for retrieving and caching content. These criteria may include an amount of elapsed time since a last retrieval and caching, a frequency with which the content is requested, a size of the content, a type of content, and the like and/or combinations thereof. In step 605, the remote browser server may determine whether the criteria calls for retrieval and caching of content. In one arrangement, the remote browser server may step through a list of content and/or content sources, and determine how recently each content item has been updated. The list of content or content sources may be generated by determining the frequency with which each content is requested by users in the network. Using a recency threshold, the remote browser server may determine whether the content should be retrieved once more for pre-caching and storage. Accordingly, the cached content may be updated or refreshed to reflect a current version of the content. If the remote browser server determines that the retrieval and caching criteria is satisfied for particular content, it may initiate a content retrieval process to obtain a current version of that content in step 610. In one example, the content retrieval process may include launching a headless session (e.g., SELENIUM) to fetch content from a website. Various other types of retrieval processes and applications may be used and/or applied as desired. In some arrangements, the same content may be provided in different form factors such as desktop and mobile versions. Accordingly, the remote browser server may be configured to retrieve each form factor of the content.

In step 615, the remote server may process each retrieved content item to generate a cached or local version. In some examples, the remote server may retrieve the content file (or multiple content files or data structures) used to generate the requested content from a specific network location, rather than obtaining an image of the content (e.g., a screenshot or an image capture). Retrieving the content source file may allow the remote server to better maintain an accurate representation of the content (e.g., scaling for varying resolutions, etc.). In one or more arrangements, obtaining the content file may include retrieving an HTML file from a web address for a popular website. However, because the remote server might only wish to preserve the look and feel of the webpage without retaining active scripts or other elements of the content, the remote server may parse the content file to generate a filtered local version that removes non-essential portions. In one example, the remote server might only wish to retain user input elements to help bridge the time during which a remote browser session is being activated with the live webpage or other content. According to one arrangement, the remote browser server may parse the content file to identify any scripts or other active code and remove those identified scripts and code from the file. All style settings (e.g., CSS information) may be retained to maintain the appearance (i.e., the look and feel) of the page. Additionally, processing the retrieved content may further include injecting or otherwise adding code to the content file. For example, the remote browser server may add user input processing script (e.g., JAVASCRIPT setup handlers) to provide recording of the user input. According to one arrangement, the remote browser server may remove the original user input processing code or script with a local version that will direct the input to a storage associated with the remote browser server or client device (e.g., rather than to a server or device of the content source).

Once generated, the local version of the content file may be stored in step 620 in a database associated with the remote network browser. The cached content file may be stored with various information such as a retrieval date, the content source address, an expiration date, and the like and/or combinations thereof. The cached content file may be then distributed to clients in response to requests to access the corresponding source as described herein. As noted herein, source content data may include multiple content files or content data structures. Accordingly, a content item may correspond to multiple pre-stored content files or other data structure as appropriate. Moreover, the parsing process may include generating multiple pre-stored content data structures (files or otherwise) from a single source content file as needed.

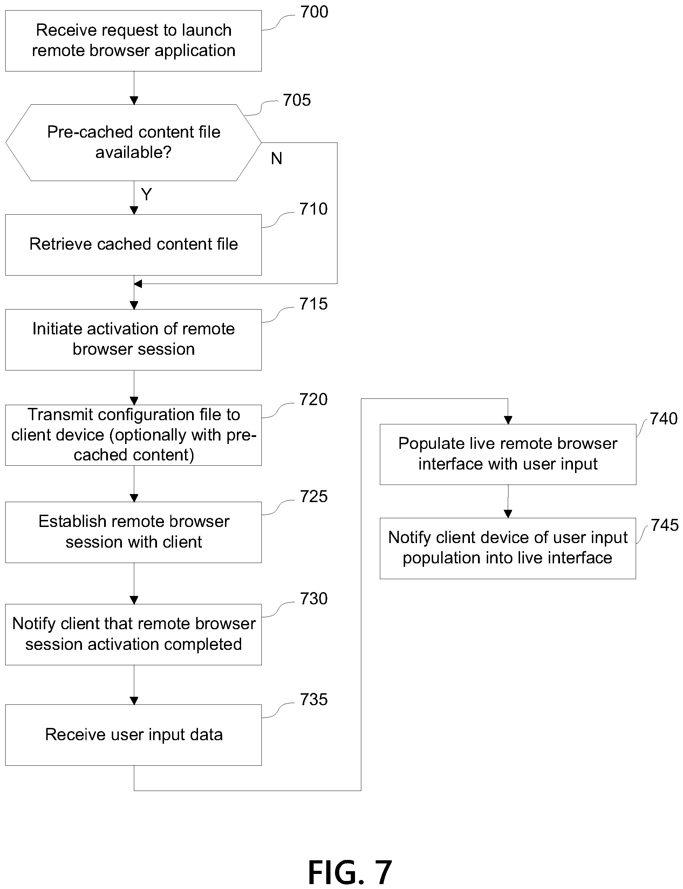

FIG. 7 is a flowchart illustrating an example process by which a remote browser server may process requests for remote browsing access to restricted content. In step 700, a remote browser server may receive a request from a client device to launch a remote browser application for retrieving specified content. For example, the client device may transmit a request to the remote browser server identifying content (e.g., web address, FTP site, etc.) that the user wishes to access. The request may include a request to activate a remote browser session if the client device is aware that the requested content is on a restricted list. In step 705, the remote browser server may determine whether a pre-cached content file corresponding to the requested content is available. For example, the remote browser server may inspect a database of pre-cached content files (e.g., web pages or the like) and determine whether the address of the requested content matches any of the addresses of the pre-cached files. If the remote browser server determines that the requested content is not pre-cached, the remote browser server may proceed with initiating a remote browser session as explained in steps 715-745.

If, on the other hand, the remote browser server determines that the requested content is pre-cached, the remote browser server may retrieve one or more cached content files or other data structure in step 710, and initiate activation of a remote browser session in step 715. In conjunction with activating the remote browser session, the remote browser server may transmit a remote browser session configuration file (e.g., an ICA file or RDP file) to the client device in step 720. Here, if the requested content was pre-cached, the remote browser server may also transmit the cached content file along with the configuration file. The order in which the configuration file and the pre-cached content file(s) are sent can vary, with the pre-cached content file(s) being sent first in some instances, and the configuration file being sent first in others. In some arrangements, sending the pre-cached content file(s) as quickly as possible may be beneficial so as to allow the client device (and thus, the user) to view the content as quickly as possible. However, if the content was not pre-cached, only the remote browser session configuration file may be sent to the client device (i.e., without pre-cached content) in step 720.

In step 725, the remote browser server may communicate with the client device to establish a remote browser session for communication of data for the remote browser application instance. For example, the remote browser server and the client device may exchange protocol and authentication information to establish a channel through which the client device will communication with the remote browser session. In step 730, the remote browser server may communicate to the client device that the remote browser session activation has completed. For example, the remote browser server may begin sending data for displaying the remote browser session interface upon completion of launch. This may indicate to the client device that the remote browser session has finished launching. In response, the remote browser server may receive user input data in step 735. This input may correspond to data intended as input for the requested content (e.g., a website). Accordingly, in step 740, the remote browser server may populate one or more fields in the content displayed in the remote browser based on the received user input data. Once the live content is populated with the user input data, the remote browser data may notify the client device in step 745. This notification may trigger the client device to switch to the live session of the content versus continuing with the pre-cached content. In some arrangements, the notification may be the next transmission of interface data from the server to the client device. That is, the notification might not include a specific message indicating that the population of the user input data has been completed.

While aspects described herein describe a network access application being executed by a remote server, the same processes and functions may be performed locally by the client device. For example, the client device may host its own virtual machine and execute a network access application therein. In some arrangements, the client device hosts a micro virtual machine managed by a client device-operated hypervisor. This micro virtual machine may provide a sandbox environment to insulate other applications and data from activity performed within the micro virtual machine. Accordingly, the processes ascribed to a remote server described herein (e.g., with respect to Figures 4-7) may be performed by a client-based micro virtual machine and/or hypervisor. Thus, the described communications such as requests and responses and the transmission of data may be performed between virtual machines or between virtual machine and the local machine within the same client device. Additionally, the execution of applications and retrieval of content may also be performed through the local micro virtual machine.

The following paragraphs (M1) through (M9) describe examples of methods that may be implemented in accordance with the present disclosure.

(M1) A method comprising: receiving, by a client application executing on a computing system, a request for content from a network location; initiating, by the computing system, execution of a network access application, wherein the network access application is separately executed from the client application; before initiating the execution of the network access application or while execution of the network access application is being initiated: obtaining, by the computing system, at least one pre-stored content file corresponding to the requested content, wherein the at least one pre-stored content file is stored prior to receiving the request for content by the client application; generating, by the computing system, a user interface based on the at least one pre-stored content file; and receiving, by the computing system, user input directed into the generated user interface; determining, by the computing system, that activation of the network access application is complete; and in response to determining that activation of the network access application is complete, transferring the received user input into the network access application.

(M2) A method may be performed as described in paragraph (M1), wherein initiating execution of the network access application includes: sending a request to a remote device to execute the network access application; and establishing a secure communication channel between the computing system and the remote device for transmitting data to and from the network access application.

(M3) A method may be performed as described in paragraph (M1) or paragraph (M2), further comprising: prior to receiving the request for the content, retrieving the content from the network location and storing the content as the at least one pre-stored content file.

(M4) A method may be performed as described in paragraph (M3), wherein retrieving the content from the network location includes: parsing a at least one source content file received from the network location; and generating the at least one pre-stored content file based on the parsing of the at least one source content file.

(M5) A method may be performed as described in paragraph (M4), wherein generating the at least one pre-stored content file further includes inserting computer-executable code in the at least one pre-stored content file based on the parsing of the at least one source content file.

(M6) A method may be performed as described in any of paragraphs (M1) through (M5), wherein the at least one pre-stored content file is retrieved from a local network environment comprising a plurality of computing devices belonging to an organization and located in multiple different geographic locations.

(M7) A method may be performed as described in any of paragraphs (M1) through (M6), wherein generating the user interface based on the at least one pre-stored content file and receiving the user input directed into the user interface are performed through the client application.

(M8) A method may be performed as described in any of paragraphs (M1) through (M7), further comprising after transferring the received user input into the network access application, switching a display from the generated user interface to an interface of the network access application.

(M9) A method may be performed as described in any of paragraphs (M1) through (M8), wherein transferring the received user input into the network access application includes: determining whether user input is being actively entered; and in response to determining that user input is actively entered, waiting until user input is not being actively before transferring the received user input.

The following paragraphs (CRM1) through (CRM7) describe examples of computer-readable media storing computer-readable instructions that may be implemented in accordance with the present disclosure.

(CRM1) A computer-readable medium storing computer-readable instructions that, when executed, cause an apparatus to: receive, through a client application, a request for content from a network location; initiate execution of a network access application, wherein the network access application is separately executed from the client application; before initiating the execution of the network access application or while execution of the network access application is being initiated: obtain at least one pre-stored content file corresponding to the requested content, wherein the at least one pre-stored content file is stored prior to receiving the request for content by the client application; generate a user interface based on the at least one pre-stored content file; and receive user input directed into the generated user interface; determine that activation of the network access application is complete; and in response to determining that activation of the network access application is complete, transfer the received user input into the network access application.

(CRM2) A computer-readable medium may store computer-readable instructions as described in paragraph (CRM1), wherein the computer-readable instructions further cause the apparatus to: after transferring the received user input into the network access application, switch a display of the apparatus from the generated user interface to an interface of the network access application.

(CRM3) A computer-readable medium may store computer-readable instructions as described in paragraph (CRM1) or paragraph (CRM2), wherein initiating execution of the network access application includes: sending a request to a remote device to execute the network access application; and establishing a secure communication channel between the apparatus and the remote device for transmitting data to and from the network access application.

(CRM4) A computer-readable medium may store computer-readable instructions as described in any of paragraph (CRM1) through paragraph (CRM3), wherein the computer-readable instructions further cause the apparatus to: prior to receiving the request for the content, retrieve the content from the network location and store the content as the at least one pre-stored content file.

(CRM5) A computer-readable medium may store computer-readable instructions as described in paragraph (CRM4), wherein retrieving the content from the network location includes: parsing at least one source content file received from the network location; and generating the at least one pre-stored content file based on the parsing of the at least one source content file.

(CRM6) A computer-readable medium may store computer-readable instructions as described in paragraph (CRM5), wherein generating the at least one pre-stored content file further includes inserting computer-executable code in the at least one pre-stored content file based on the parsing of the at least one at least one source content file.

(CRM7) A computer-readable medium may store computer-readable instructions as described in any of paragraph (CRM1) through paragraph (CRM6), wherein the at least one pre-stored content file is retrieved from a local network environment comprising a plurality of computing devices belonging to an organization and located in multiple different geographic locations.

The following paragraphs (A1) through (A4) describe examples of apparatuses having a processor and memory storing computer-readable instructions that may be implemented in accordance with the present disclosure.

(A1) An apparatus comprising: a processor; and memory storing computer-readable instructions that, when executed by the processor, cause the apparatus to: receive, through a client application, a request for content from a network location; initiate execution of a network access application, wherein the network access application is separately executed from the client application; before initiating the execution of the network access application or while execution of the network access application is being initiated: obtain at least one pre-stored content file corresponding to the requested content, wherein the at least one pre-stored content file is stored prior to receiving the request for content by the client application; generate a user interface based on the at least one pre-stored content file; and receive user input directed into the generated user interface; determine that activation of the network access application is complete; and in response to determining that activation of the network access application is complete, transfer the received user input into the network access application.

(A2) An apparatus having a processor and memory may store computer-readable instructions as described in paragraph (A1), wherein the computer-readable instructions further cause the apparatus to: after transferring the received user input into the network access application, switch a display of the apparatus from the generated user interface to an interface of the network access application.

(A3) An apparatus having a processor and memory may store computer-readable instructions as described in paragraph (A1) or paragraph (A2), wherein initiating execution of the network access application includes: sending a request to a remote device to execute the network access application; and establishing a secure communication channel between the apparatus and the remote device for transmitting data to and from the network access application.

(A4) An apparatus having a processor and memory may store computer-readable instructions as described in any of paragraph (A1) through paragraph (A3), wherein transferring the received user input into the network access application includes: determining whether user input is being actively entered; and in response to determining that user input is actively entered, waiting until user input is not being actively before transferring the received user input.

Although the subject matter has been described in language specific to structural features and/or methodological acts, it is to be understood that the subject matter defined in the appended claims is not necessarily limited to the specific features or acts described above. Rather, the specific features and acts described above are described as example implementations of the following claims.

## Claims

1. A method comprising:
receiving, by a client application executing on a computing system, a request for content from a network location;
initiating, by the computing system, execution of a network access application, wherein the network access application is separately executed from the client application;
before initiating the execution of the network access application or while execution of the network access application is being initiated:
obtaining, by the computing system, at least one pre-stored content file corresponding to the requested content, wherein the at least one pre-stored content file is stored prior to receiving the request for content by the client application;
generating, by the computing system, a user interface based on the at least one pre-stored content file; and
receiving, by the computing system, user input directed into the generated user interface;
determining, by the computing system, that activation of the network access application is complete; and
in response to determining that activation of the network access application is complete, transferring the received user input into the network access application.

2. The method of claim 1, wherein initiating execution of the network access application includes:
sending a request to a remote device to execute the network access application; and
establishing a secure communication channel between the computing system and the remote device for transmitting data to and from the network access application.

3. The method of claim 1, further comprising:
prior to receiving the request for the content, retrieving the content from the network location and storing the content as the at least one pre-stored content file.

4. The method of claim 3, wherein retrieving the content from the network location includes:
parsing at least one source content file received from the network location; and
generating the at least one pre-stored content file based on the parsing of the at least one source content file.

5. The method of claim 4, wherein generating the at least one pre-stored content file further includes inserting computer-executable code in the at least one pre-stored content file based on the parsing of the at least one source content file.

6. The method of claim 1,
wherein the at least one pre-stored content file is retrieved from a local network environment comprising a plurality of computing devices belonging to an organization and located in multiple different geographic locations.

7. The method of claim 1, wherein generating the user interface based on the at least one pre-stored content file and receiving the user input directed into the user interface are performed through the client application.

8. The method of claim 1, further comprising:
after transferring the received user input into the network access application, switching a display from the generated user interface to an interface of the network access application.

9. The method of claim 1, wherein transferring the received user input into the network access application includes:
determining whether user input is being actively entered; and
in response to determining that user input is actively entered, waiting until user input is not being actively before transferring the received user input.

10. An apparatus comprising:
a processor; and
memory storing computer-readable instructions that, when executed by the processor, cause the apparatus to:
receive, through a client application, a request for content from a network location;
initiate execution of a network access application, wherein the network access application is separately executed from the client application;
before initiating the execution of the network access application or while execution of the network access application is being initiated:
obtain at least one pre-stored content file corresponding to the requested content, wherein the at least one pre-stored content file is stored prior to receiving the request for content by the client application;
generate a user interface based on the at least one pre-stored content file; and
receive user input directed into the generated user interface;
determine that activation of the network access application is complete; and
in response to determining that activation of the network access application is complete, transfer the received user input into the network access application.

11. The apparatus of claim 17, wherein the computer-readable instructions further cause the apparatus to:
after transferring the received user input into the network access application, switch a display of the apparatus from the generated user interface to an interface of the network access application.

12. The apparatus of claim 17, wherein initiating execution of the network access application includes:
sending a request to a remote device to execute the network access application; and
establishing a secure communication channel between the apparatus and the remote device for transmitting data to and from the network access application.

13. The apparatus of claim 17, wherein transferring the received user input into the network access application includes:
determining whether user input is being actively entered; and
in response to determining that user input is actively entered, waiting until user input is not being actively before transferring the received user input.

14. The apparatus of claim 10, wherein initiating execution of the network access application includes:
prior to receiving the request for the content, retrieve the content from the network location and store the content as the at least one pre-stored content file, wherein the at least one pre-stored content file is retrieved from a local network environment comprising a plurality of computing devices belonging to an organization and located in multiple different geographic locations.

15. The apparatus of claim 10, wherein initiating execution of the network access application includes:
parsing at least one source content file received from the network location; and
generating the at least one pre-stored content file based on the parsing of the at least one source content file, wherein generating the at least one pre-stored content file further includes inserting computer-executable code in the at least one pre-stored content file based on the parsing of the at least one source content file.
